# EUROPÄISCHE PATENTANMELDUNG

(11) **EP 2 556 939 A1**
(43) Veröffentlichungstag der Anmeldung: **13.02.2013**
(21) Anmeldenummer: 11177437.8
(22) Anmeldetag: 12.08.2011
(51) Int. Cl.: B29C 45/00, B29C 45/14

(54) **Klappenvorrichtung mit an Klappe angespritzter Spaltdichtung, Verfahren und Halbzeug zu deren Herstellung**

(71) Anmelder: Röchling Automotive AG & Co. KG, 68165 Mannheim (DE)
(72) Erfinder: Kerschbaumer, Dieter, 39040 Tramin (IT); Di Pauli, Ferdinand, 39100 Bozen (IT)
(74) Vertreter: Trossin, Hans-Jürgen

(57) **Zusammenfassung**

Ein Verfahren zur gießtechnischen, insbesondere spritzgießtechnischen Herstellung einer Klappenvorrichtung (10), insbesondere Drosselvorrichtung, bevorzugt zum Einsatz in Kraftfahrzeugen, wobei die Klappenvorrichtung (10) ein Gehäuse (20, 22, 24) umfasst, welches einen Strömungskanalabschnitt (26, 28, 30) umgibt, und weiter eine am Gehäuse (20, 22, 24) derart relativ zu diesem beweglich aufgenommene Klappe (32, 34, 36) umfasst, dass durch eine Relativverstellung der Klappe (32, 34, 36) relativ zum Gehäuse (20, 22, 24) der wirksame Strömungsquerschnitt des Strömungskanalabschnitts (26, 28, 30) veränderbar ist, wobei das Gehäuse (20, 22, 24) und die daran bereits aufgenommene Klappe (32, 34, 36) in einem Formwerkzeug in einem gemeinsamen Gießschritt aus einer fließfähigen Gießmasse formgebend gebildet werden, und zwar unter einstückiger Ausbildung eines verglichen mit den Wandstärken des Gehäuses (20, 22, 24) und der Klappe dünnen Gießmaterialhäutchens (60) zusammen mit der Klappe und dem Gehäuse, wobei das Gießmaterialhäutchen (60) zwischen einem äußeren Klappenabschnitt, bevorzugt genauer zwischen einem äußeren Klappenrand (56) und einem den Klappenabschnitt, bevorzugt den Klappenrand (56), in einer Sperrstellung der Klappe (32, 34, 36) relativ zum Gehäuse (20, 22, 24) umgebenden Gehäuseabschnitt vorgesehen wird, in welcher Sperrstellung der Strömungsquerschnitt des Strömungskanalabschnitts (26, 28, 30) in der Regel minimal ist.

## Beschreibung

Die vorliegende Erfindung betrifft ein Verfahren zur gießtechnischen, insbesondere spritzgießtechnischen Herstellung einer Klappenvorrichtung, insbesondere Drosselvorrichtung, bevorzugt zum Einsatz in Kraftfahrzeugen, wobei die Klappenvorrichtung ein Gehäuse umfasst, welches einen Strömungskanalabschnitt umgibt, und weiter eine am Gehäuse derart relativ zu diesem beweglich aufgenommene Klappe umfasst, dass durch eine Relativverstellung der Klappe relativ zum Gehäuse der wirksame Strömungsquerschnitt des Strömungskanalabschnitts veränderbar ist.

Die vorliegende Erfindung betrifft weiter ein Halbzeug zur Herstellung der oben genannten Klappenvorrichtung sowie die Klappenvorrichtung selbst. Die oben genannte Klappenvorrichtung, die eine oder mehrere Klappen und in der Regel pro Klappe einen Strömungskanalabschnitt aufweisen kann, ist bevorzugt zur Verwendung in Kraftfahrzeugen geeignet, um dort Gasströmungen aller Arten, wie etwa eine Frischgaszufuhr zu der Brennkraftmaschine, mengenstrommäßig durch Relativverstellung der wenigstens einen Klappe relativ zum Gehäuse zu verändern. Es ist überdies bekannt, Komponenten einer derartigen Klappenvorrichtung, wie beispielsweise die Klappe einerseits und das Gehäuse andererseits, kostengünstig spritzgießtechnisch herzustellen.

Allerdings kann gerade bei spritzgegossenen Komponenten der Klappenvorrichtung ein Dichtigkeitsproblem auftreten.

Aufgrund von Schwindungsvorgängen oder/und Expansionsvorgängen des Gießmaterials nach der Erstarrung in der Gießform, insbesondere nach der Entformung, kann es zu Leckageproblemen im Spaltbereich zwischen Klappe und Gehäuse kommen. Diese Spaltleckage ist insbesondere dann von Bedeutung, wenn die Klappe den Strömungskanalabschnitt des ihm zugeordneten Gehäuses in einer Sperrstellung im Wesentlichen vollständig verschließen soll.

Dann kann es aufgrund von fertigungsverfahrensbedingten Ungenauigkeiten zur Ausbildung eines unerwünschten Ringspalts zwischen einem äußeren Klappenrand und einem diesen äußeren Klappenrand in der oben beschriebenen Sperrstellung der Klappe umgebenden Gehäuseabschnitt kommen. Durch diesen Ringspalt kann weiter Gas durch den Strömungskanalabschnitt strömen, obwohl eigentlich eine vollständige Absperrung des Strömungskanalabschnitts gewünscht ist.

Zur Abdichtung dieses unerwünschten Ringspalts wird daher im Stand der Technik häufig eine gesondert hergestellte Dichtung in einem Montageschritt an die Klappe anmontiert, was jedoch aufwendig und teuer ist.

Es ist daher Aufgabe der vorliegenden Erfindung, eine technische Lehre anzugeben, mit welcher die eingangs genannte Klappenvorrichtung weiterhin kostengünstig und in großen Stückzahlen herstellbar ist und welche eine Verminderung oder gar Beseitigung des oben beschriebenen Leckageproblems ermöglicht.

Gemäß einem ersten Aspekt der vorliegenden Erfindung wird diese Aufgabe gelöst durch ein Verfahren der eingangs genannten Art, bei welchem das Gehäuse und die daran bereits aufgenommene Klappe in einem Formwerkzeug in einem gemeinsamen Gießschritt aus einer fließfähigen Gießmasse formgebend gebildet werden, und zwar unter einstückiger Ausbildung eines verglichen mit den Wandstärken des Gehäuses und der Klappe dünnen Gießmaterialhäutchens zusammen mit der Klappe und dem Gehäuse, wobei das Gießmaterialhäutchen zwischen einem äußeren Klappenabschnitt und einem den Klappenabschnitt in einer Sperrstellung der Klappe relativ zum Gehäuse umgebenden Gehäuseabschnitt vorgesehen wird, in welcher Sperrstellung der Strömungsquerschnitt des Strömungskanalabschnitts in der Regel minimal ist.

Wenngleich im Rahmen der vorliegenden Anmeldung stets bevorzugt an ein spritzgießtechnisches Verfahren gedacht ist, sollen andere Gießverfahren nicht ausgeschlossen sein.

Durch das Ausbilden des Gehäuses und der daran bereits aufgenommenen Klappe in einem einzigen gemeinsamen Gießschritt und in einem gemeinsamen Formwerkzeug mit gemeinsamen Gießmaterial wird zum einen sichergestellt, dass die Materialkenngrößen, wie etwa Schwindung, thermischer Ausdehnungskoeffizient und dergleichen, welche auf die Maßhaltigkeit der Komponenten der Klappenvorrichtung eine Auswirkung haben, für Klappe und für Gehäuse im Wesentlichen identisch sind, so dass einmal erreichte Genauigkeiten und Abmessungen auch im Betrieb unter welchselnden Temperaturen im Wesentlichen beibehalten werden können.

Weiterhin wird durch den gemeinsamen Gießschritt in einem gemeinsamen Formwerkzeug ein Halbzeug gebildet, bei welchem bevorzugt wenigstens der äußere Klappenrand, aber auch ein beliebiger anderer geeigneter Abschnitt der Klappe, mit dem ihn in der Sperrstellung der Klappe umgebenden Gehäuseabschnitt durch ein verglichen mit der Dickenabmessung der Klappe dünnes Gießmaterialhäutchen oder einen dünnen Gießmaterialgrad verbunden ist.

Bevorzugt wird also Gehäuse und Klappe in dem Gießschritt derart hergestellt, dass sich die Klappe bezüglich des Gehäuses in der Sperrstellung befindet, also in einer Stellung, in welcher der wirksame Strömungsquerschnitt des Strömungskanalabschnitts in der Regel minimal ist.

Dieses Gießmaterialhäutchen ist verglichen mit der Materialdicke des unmittelbar an ihn angrenzenden Klappenabschnitts, insbesondere Klappenrandes, dünn ausgebildet, damit das Gießmaterialhäutchen mit einem Werkzeug, wie etwa einer Klinge, durchtrennt werden kann, die Klappe mit demselben Werkzeug jedoch nicht oder nur mit unverhältnismäßig hoher Kraft durchdrungen werden kann.

Dann kann nämlich das beim gemeinsamen Gießschritt von Gehäuse und Klappe gebildete Gießmaterialhäutchen als Spaltdichtung wirken. Damit wird eine Anbringung einer gesonderten Dichtung überflüssig. Vielmehr kann eine ansonsten im Stand der Technik zur Vermeidung der oben beschriebenen Leckageverluste notwendige zusätzliche, also gesondert von Klappe und Gehäuse ausgebildete, Dichtung vermieden werden.

Das Gießmaterialhäutchen kann zur Gewährleistung der oben beschriebenen Eigenschaft etwa 1 % bis 40 %, bevorzugt 5 % bis 20 %, besonders bevorzugt 5 % bis 15 %, der Wandstärke oder mittleren Wandstärke der Klappe aufweisen.

Dies bedeutet, dass ein derart in einem Gießschritt erzeugtes Halbzeug aus Gehäuse und Klappe zwar die Klappe bereits drehbar im Gehäuse gelagert aufweist, eine Relativdrehung der Klappe relativ zum Gehäuse unmittelbar nach dem Entformen jedoch durch das Gießmaterialhäutchen verhindert ist.

Dieses die Klappe und das Gehäuse einstückig verbindende Gießmaterialhäutchen kann im Wesentlichen der einzige Unterschied zwischen dem nach dem gemeinsamen Gießschritt entformten Halbzeug und der fertiggestellten, weil funktionstüchtigen, Klappenvorrichtung sein.

Zur Herstellung der Funktionstüchigkeit der Klappenvorrichtung umfasst daher das hier beschriebene Verfahren vorzugsweise den Schritt eines Durchtrennens des Gießmaterialhäutchens. Dieses Durchtrennen kann, wie oben bereits dargelegt wurde, durch ein Werkzeug, insbesondere Schneidwerkzeug, erfolgen. Grundsätzlich kann jedoch bei ausreichend dünnem Gießmaterialhäutchen auch daran gedacht sein, das Gießmaterialhäutchen durch Zwangsrelativbewegung von Klappe und Gehäuse zu zerreißen.

Letzteres, wenngleich es von der vorliegenden Erfindung umfasst sein soll, ist jedoch nicht bevorzugt, da es bei einem derartigen Reißvorgang zu einer unerwünschten Dehnung des Gießmaterials im Gießmaterialhäutchen kommen kann, so dass es im späteren Betrieb der Klappenvorrichtung zu einer unerwünschten Reibung des aus dem gedehnten und gerissenen Gießmaterialhäutchen hervorgehenden Grats am äußeren Klappenabschnitt, insbesondere Klappenrand, oder/und an dem betreffenden Gehäuseabschnitt kommen kann.

Zur Bereitstellung einer möglichst genauen, also form- oder/und maßhaltigen, Relativbewegung zwischen Klappe und Gehäuse kann es dann, wenn die Klappe an der fertigen Klappenvorrichtung um eine Klappenachse relativ zum Gehäuse verdrehbar an diesem vorgesehen ist, vorteilhaft sein, wenn das Verfahren einen Verfahrensschritt eines Einlegens eines Klappenwellenbauteils in das Formwerkzeug umfasst.

Das Klappenwellenbauteil kann beispielsweise ein Metallbauteil oder ein Bauteil aus einem sonstigen Material, welches formstabiler als das ausgehärtete Gießmaterial ist, sein.

Dann ist es nämlich möglich, die Klappe an das Klappenwellenbauteil anzugießen, insbesondere anzuspritzen, oder das Klappenwellenbauteil mit der Klappe zu umgießen, insbesondere zu umspritzen.

Im erstgenannten Fall des Angießens ist das Klappenwellenbauteil nicht vollständig von zur Bildung der Klappe beitragendem Gießmaterial umgeben, während im Falle des Umgießens das Klappenwellenbauteil vollständig von zur Bildung der Klappe beitragenden Gießmaterial umgeben ist.

Das Umgießen ist dabei bevorzugt, da das umgossene Klappenwellenbauteil zum einen durch das Gießmaterial der Klappe weitgehend geschützt ist und überdies an der Außenfläche der mit dem Klappenwellenbauteil verstärkten Klappe keine unerwünschte Materialpaarung auftritt, die bei Relativbewegung von Klappe und Gehäuse zu unerwünschtem Verschleiß führen kann.

Weiterhin kann für den oben genannten Fall einer um eine Klappenachse verdrehbaren Klappe relativ zum Gehäuse vorgesehen sein, dass das Verfahren folgende weitere Verfahrensschritte aufweist:
- Einlegen wenigstens einer Lagerbuchse in das Formwerkzeug, vorzugsweise von zwei Lagerbuchsen, besonders bevorzugt derart, dass zwischen zwei derselben Klappe zugeordneten Lagerbuchsen ein Abschnitt einer Klappenkavität des Formwerkzeugs gelegen ist, und
- Angießen, insbesondere Anspritzen, von zur Bildung der Klappe beitragendem Gießmaterial an eine erste, der Klappe zugeordnete Klappenlagerfläche der Lagerbuchse, und
- Angießen, insbesondere Anspritzen, von zur Bildung des Gehäuses beitragendem Gießmaterial an eine von der ersten verschiedene zweite, dem Gehäuse zugeordnete Gehäuselagerfläche der Lagerbuchse.

Durch das Einlegen der Lagerbuchse in das Formwerkzeug kann also ein Lagermittel unmittelbar im Formwerkzeug bereitgestellt werden, welches nach erfolgtem Gießvorgang das Material der Klappe vom Material des Gehäuses derart trennt, dass die Klappe zwar im Gehäuse aufgenommen und an diesem gehaltert ist, dass aber im Bereich dieser Halterung Gießmaterial der Klappe und Gießmaterial des Gehäuses durch die Lagerbuchse voneinander getrennt sind, so dass es trotz geometrischer Teildurchdringung des Gehäuses durch die Klappe zu einer Relativbewegung von Klappe und Gehäuse kommen kann.

Dabei soll nicht ausgeschlossen sein, dass an anderer Stelle, etwa in einem axial außerhalb des Gehäuses liegenden Bereich, Gießmaterial des Gehäuses und Gießmaterial der Klappe miteinander verströmt sind und dieser Strömungsbereich erst vom entformten Halbzeug abgetrennt werden muss, bevor nach Trennung des Gießmaterialhäutchens eine Relativbeweglichkeit von Klappe und Gehäuse hergestellt ist. In diesem Falle würde ein derartiger Zusammenströmungsbereich einen weiteren Unterschied, zusätzlich zum Gießmaterialhäutchen, zwischen dem Halbzeug und der fertigen Klappenvorrichtung darstellen.

Bevorzugt wird ein derartiger Zusammenströmungsbereich jedoch vermieden, um die erforderliche Nacharbeit des gegossenen Halbzeugs in ihrem Umfang so gering wie möglich zu halten.

Vorzugsweise wird sowohl die wenigstens eine Lagerbuchse als auch das Klappenwellenbauteil vor dem Gießvorgang in das Formwerkzeug eingelegt, wobei es dann vorteilhaft ist, wenn das Verfahren den Schritt eines Einfädelns des Klappenwellenbauteils in eine Lagerbuchse, vorzugsweise in alle der Klappe des Klappenwellenbauteils zugeordnete Lagerbuchsen, umfasst. Dann nämlich kann das Klappenwellenbauteil die Lagerbuchse durchsetzen und nicht nur zwischen den Lagerstellen der Klappe am Gehäuse, sondern vor allem in den Lagerstellen der Klappe am Gehäuse für eine erhöhte Stabilität der Klappe und somit der gesamten Klappenvorrichtung sorgen.

Wie der obigen Beschreibung unschwer zu entnehmen ist, wird die eingangs erläuterte, der vorliegenden Erfindung zugrunde liegende technische Aufgabe auch gelöst durch ein Halbzeug einer Klappenvorrichtung, insbesondere Drosselvorrichtung, bevorzugt zum Einsatz in Kraftfahrzeugen, wobei die fertiggestellte Klappenvorrichtung ein Gehäuse umfasst, welches einen Strömungskanalabschnitt umgibt, und weiter eine am Gehäuse derart relativ zu diesem beweglich aufgenommene Klappe umfasst, dass durch eine Relativverstellung der Klappe relativ zum Gehäuse der wirksame Strömungsquerschnitt des Strömungskanalabschnitts veränderbar ist, insbesondere hergestellt nach dem oben beschriebenen Verfahren, bei welchem wenigstens ein Klappenabshnitt, insbesondere ein äußerer Klappenrand, und ein in betriebsmäßigem Zustand der Klappenvorrichtung die Klappe umgebender Gehäuseabschnitt über ein verglichen mit den Wandstärken des Gehäuses und der Klappe dünnes Gießmaterialhäutchen verbunden und somit einstückig ausgebildet sind.

Ein derartiges Halbzeug kann als selbständig handelbares Gut am Markt vertrieben werden, etwa von Kfz-Zulieferbetrieben, welche das Halbzeug mit intaktem Gießmaterialhäutchen an einen Kfz-Hersteller liefern und diesem den Zeitpunkt der Inbetriebnahme des Halbzeugs, also der Herstellung der Klappenvorrichtung aus dem Halbzeug durch Trennung des Gießmaterialhäutchens, überlassen.

Dann, wenn die Klappe an der fertigen Klappenvorrichtung um eine Klappenachse relativ zum Gehäuse verdrehbar an diesem vorgesehen ist, - alternativ kann auch an eine translatorisch bewegbare Klappe gedacht sein - ist es vorteilhaft, wenn die Klappe einen Klappenkörper und wenigstens einen mit diesem zur gemeinsamen Bewegung verbundenen Klappenwellenabschnitt aufweist. Der Klappenkörper ist dann bevorzugt jener Abschnitt der Klappe, mit welchem die oben beschriebene Veränderung des Strömungsquerschnitts durch Änderung der Relativanordnung bewirkt wird und welcher hierfür ausgebildet ist.

Der Klappenwellenabschnitt, welcher aus Gründen der Maßhaltigkeit und Formstabilität sowie zur Vermeidung unerwünschten Montageaufwands bevorzugt einstückig mit dem Klappenkörper ausgebildet ist, ist dann dazu ausgebildet, die Klappe mit dem Klappenkörper drehbar am Gehäuse aufzunehmen.

Um die Dichtungswirkung des Gießmaterialhäutchens gewährleisten zu können, ist es vorteilhaft, wenn der an das Gießmaterialhäutchen angrenzende Klappenrand Teil des Klappenkörpers ist. Dann kann nämlich gewährleistet werden, dass das Gießmaterialhäutchen tatsächlich den eingangs beschriebenen unerwünschten Leckagespalt abdichten kann.

Eine besonders stabile Lagerung der Klappe zur Relativverdrehung relativ zum Gehäuse kann dadurch erhalten werden, dass die Klappe zwei bezüglich der Klappenachse im Wesentlichen kollineare Klappenwellenabschnitte aufweist, wobei der Klappenkörper axial zwischen den Klappenwellenabschnitten vorgesehen ist. Durch die Anordnung des Klappenkörpers axial zwischen den Klappenwellenabschnitten kann überdies eine aus betriebsbedingt möglicherweise auftretenden Lasten resultierende Klappenbiegung vermieden oder wenigstens erheblich reduziert werden, welche ansonsten die Relativverdrehbarkeit der Klappe relativ zum Gehäuse beeinträchtigen könnte.

In vielen Fällen kann die Klappenvorrichtung oder das zu ihrer Herstellung angefertigte Halbzeug mehrere Klappen aufweisen, etwa wenn mehrere gleichartige Strömungskanäle zu jedem Zylinder einer Mehrzylinder-Brennkraftmaschine führen und der Gasmengenstrom in jedem der Strömungskanäle veränderbar sein soll.

Dann ist es zur Erhöhung der Fertigungs- und Montagegenauigkeit und damit zur Genauigkeit der Gasmengenstromsteuerung oder -regelung äußerst vorteilhaft, wenn benachbarte Klappen durch Formschlussgeometrien zur gemeinsamen Bewegung miteinander koppelbar oder gekoppelt sind.

Dies bedeutet, dass die Klappen, die an der fertiggestellten Klappenvorrichtung zur gemeinsamen Relativverstellung relativ zum Gehäuse miteinander verbunden sind, einzeln, d. h. gesondert voneinander, hergestellt und erst nach ihrer Herstellung miteinander gekoppelt werden. Deshalb können die einzelnen einer Mehrzahl von Klappen am Halbzeug noch ungekoppelt, aber miteinander durch Formschlussgeometrien koppelbar sein oder können bereits miteinander zur gemeinsamen Bewegung gekoppelt sein.

Dabei kann das Gehäuse ebenfalls aus mehreren Gehäuseteilen bestehen, etwa aus einem Gehäuseteil pro Klappe. Ebenso ist es jedoch denkbar, mehrere oder sogar alle Strömungskanalabschnitte im Wesentlichen in einem gemeinsamen Gehäuseteil zusammenzufassen und dieses lediglich um weitere Montageteile zu ergänzen, um eine relativbewegliche Anbringung der Klappen an dem Gehäuseteil zu ermöglichen.

Eine konstruktiv einfache und die folgende Montagearbeit erheblich vereinfachende Lösung kann dergestalt sein, dass der eine von zwei mit einem Klappenkörper verbundene Klappenwellenabschnitt, vorzugsweise an einem freien axialen Ende desselben, eine Kopplungsgeometrie aufweist und dass der jeweils andere Klappenwellenabschnitt eine Kopplungsgegengeometrie aufweist, wobei die Kopplungsgeometrie und die Kopplungsgegengeometrie formschlüssig zu einer gemeinsamen Drehbewegung um die Klappenachse koppelbar sind.

Somit weist jede Klappe bevorzugt einenends eine Kopplungsgeometrie und andernends eine Kopplungsgegengeometrie auf, so dass nur eine Art von Klappe hergestellt zu werden braucht und diese Klappe beliebig oft durch Kopplungsgeometrie und Kopplungsgegengeometrie axial aneinander gereiht werden kann, um so zu der gewünschten Klappenanzahl der jeweiligen Klappenanordnung zu gelangen.

Eine sichere und zuverlässige Drehmomentübertragung von einer Klappe zu der ihr jeweils axial benachbarten, was eine Voraussetzung für eine gemeinsame Bewegung sein kann, kann in einfacher Weise dadurch erhalten werden, dass eine Geometrie aus Kopplungsgeometrie und Kopplungsgegengeometrie eine Ausnehmung und die jeweils andere Geometrie einen drehmomentübertragend in die Ausnehmung einführbaren Vorsprung, vorzugsweise einen zu wenigstens einem Abschnitt des Ausnehmungsumfangs komplementären Vorsprung, aufweist. Durch entsprechende Wahl der axialen Länge von Ausnehmung und Vorsprung kann die an der drehmomentübertragenden Kopplungsstelle auftretende Flächenbelastung von Kopplungsgeometrie und Kopplungsgegengeometrie gering gehalten werden.

Beispielsweise kann zur Drehmomentübertragung der Vorsprung, ebenso wie die Ausnehmung, eine Querschnittsgestalt bei Betrachtung eines zur Klappenachse orthogonalen Querschnitts aufweisen, welche durch einen Polygonzug berandet ist. Allgemein kann der Vorsprung prismatisch ausgebildet sein, wobei Vorsprung und Ausnehmung zur erleichterten Montage Einführschrägen aufweisen können. Dies bedeutet, dass sich der Vorsprung mit zunehmender axialer Entfernung vom Klappenkörper verjüngt, während sich die Ausnehmung mit zunehmender Annäherung an den Klappenkörper verjüngt.

Die bevorzugte komplementäre Ausgestaltung von Ausnehmung und Vorsprung soll nicht bedeuten, dass im gekoppelten Zustand von Ausnehmung und Vorsprung keine Leerräume in dem Kopplungsgebilde mehr bestehen, denn üblicherweise muss die Ausnehmung stets axial ein wenig länger ausgeführt werden als der Vorsprung. Vielmehr soll damit ausgesagt sein, dass der überwiegende Teil der Ausnehmung nach der Kopplung von Material des Vorsprungs eingenommen ist.

Die oben genannten Vorteile zum Halbzeug treffen mutatis mutandis auch auf die Klappenvorrichtung zu, deren wesentlichster oder sogar einziger Unterschied darin besteht, dass das Gießmaterialhäutchen, welches ursprünglich Klappe und Gehäuse miteinander verbindet, bei der Klappenvorrichtung bereits durchtrennt wurde, so dass aus dem verbleibenden Restmaterial des Gießmaterialhäutchens ein Grat zurückbleibt. Daher wird die eingangs genannte Aufgabe der vorliegenden Erfindung auch gelöst durch eine Klappenvorrichtung, insbesondere Drosselvorrichtung, bevorzugt zum Einsatz in Kraftfahrzeugen, welche ein Gehäuse umfasst, das einen Strömungskanalabschnitt umgibt, und weiter eine am Gehäuse derart relativ zu diesem beweglich aufgenommene Klappe umfasst, dass durch eine Relativverstellung der Klappe relativ zum Gehäuse der wirksame Strömungsquerschnitt des Strömungskanalabschnitts veränderbar ist, bei welcher Klappenvorrichtung ein Klappenabschnitt, vorzugsweise ein äußerer Klappenrand, der wenigstens einen Klappe oder/und ein die Klappe umgebender Abschnitt des Gehäuses als Spaltdichtung des bei maximal durch die Klappe reduzierten Strömungsquerschnitts zwischen dem Klappenabschnitt, insbesondere Klappenrand der Klappe, und dem Gehäuse verbleibenden Spalt einen, vorzugsweise vollständig, umlaufenden Grat aus demselben Gießmaterial aufweist, aus dem der Klappenabschnitt, insbesondere Klappenrand der Klappe, vorzugsweise die gesamte Klappe, und der Gehäuseabschnitt hergestellt sind.

Das oben zum Halbzeug Gesagte, insbesondere die Weiterbildungen des die eingangs genannte Aufgabe lösenden erfindungsgemäßen Halbzeugs, gilt ebenso für die obige, ebenfalls erfindungsgemäße Klappenvorrichtung als Lösung der obigen Aufgabe, welche also in gleicher Weise wie das obige Halbzeug weitergebildet sein kann. Die obigen Weiterbildungen des Halbzeugs sind daher auch auf die Klappenvorrichtung zu lesen und anwendbar.

Wenn die Klappenvorrichtung, wie oben bereits beschrieben, eine Mehrzahl von gesondert voneinander gefertigten Klappen aufweist, ist es vorteilhaft, wenn die Klappenvorrichtung ein Betätigungsbauteil aufweist, mit welchem durch ein Betätigungsgerät, etwa durch einen Aktuator, ein Betätigungsdrehmoment zur Relativverdrehung von Klappen und Gehäuse in die Klappenvorrichtung einleitbar ist, um somit an einer einzigen Betätigungsstelle die gesamte Klappenvorrichtung betätigen zu können.

Das Betätigungsbauteil kann bereits mit der wenigstens einen Klappe der Klappenvorrichtung verbunden oder noch mit dieser verbindbar sein. Dann ist es zur Vereinfachung der Montagearbeit, aber auch zur Verwendbarkeit einer im Wesentlichen "universellen" Klappe nicht nur zur Ankopplung an eine andere Klappe, sondern auch zur Ankopplung an das Betätigungsbauteil vorteilhaft, wenn auch das Betätigungsbauteil eine Geometrie aus Kopplungsgeometrie und Kopplungsgegengeometrie aufweist.

Die Koppelbarkeit einer Mehrzahl von einzeln hergestellten Klappen durch die zuvor genannten Formschlussgeometrien soll nicht ausschließen, dass diese zusätzlich durch Stoffschluss, etwa durch das besonders verzugsarme Laserschweißen, oder durch Klebung oder sonstwie betriebsmäßig unlösbar miteinander verbunden sind, um einen Betrieb der Klappenvorrichtung mit möglichst genauer Veränderung des durch den Strömungskanalabschnitt strömenden Gasmengenstroms sicherstellen zu können.

Die oben bezeichnete Klappenachse kann derart angeordnet sein, dass sie den Klappenkörper im Wesentlichen durchsetzt, also etwa wie bei bekannten Schmetterlingsklappen. Ebenso kann daran gedacht sein, dass die Klappenachse mit Abstand vom Klappenkörper vorgesehen ist, wobei dann der Klappenkörper vorteilhafterweise gekrümmt ausgebildet ist, so dass der Klappenkörper in einer Durchlassstellung, in welcher der Strömungsquerschnitt des Strömungskanalabschnitts maximal ist, an die Wandung des Gehäuses anliegen kann oder sich an diese in geringer Entfernung anschmiegen kann.

Im erstgenannten Fall der Schmetterlingsklappe ist diese aus Gründen einer möglichst einfachen Fertigung vorteilhafterweise eben, also erstreckt sich längs einer Ebene.

Die vorliegende Erfindung wird nachfolgend anhand der beiliegenden Figuren näher erläutert. Es stellt dar:
- Fig. 1: eine perspektivische Explosionsansicht einer ersten erfindungsgemäßen Ausführungsform einer Klappenvorrichtung,
- Fig. 2: die Klappenvorrichtung von Fig. 1 im Teilschnitt im montierten Zustand,
- Fig. 3a: eine Querschnittsansicht durch die Klappenanordnung 12 von Fig. 2 mit einer zur Klappenachse orthogonalen Querschnittsebene,
- Fig. 3b: eine vergrößerte Detailansicht des Bereichs IIIb aus Fig. 3a und
- Fig. 3c: eine vergrößerte Detailansicht des Ausschnitts IIIc aus Fig. 3b,
- Fig. 4: eine zweite Ausführungsform einer erfindungsgemäßen Klappen-vorrichtung in perspektivischer Ansicht im Teilschnitt,
- Fig. 5: eine perspektivische Darstellung der Klappen, Lagerbuchsen und des Betätigungsbauteils der Klappenvorrichtung der zweiten Ausführungsform von Fig. 4, und
- Fig. 6: die beiden dem Betätigungsbauteil axial am nächsten liegenden Klappen der Klappenanordnung von Fig. 5 in der Explosionsansicht.

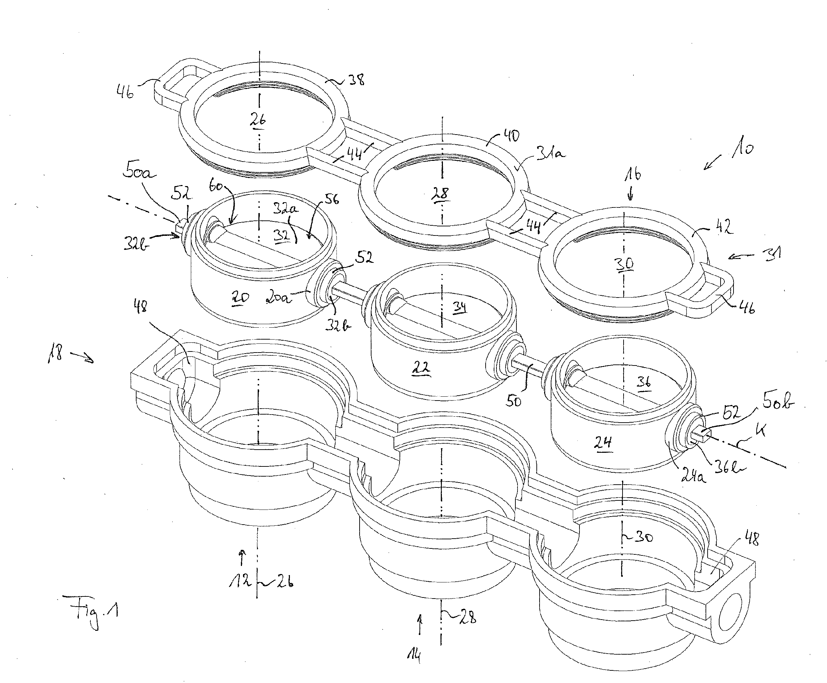

In Fig. 1 ist eine erste Ausführungsform einer erfindungsgemäßen Klappenvorrichtung allgemein mit 10 bezeichnet.

Die Klappenvorrichtung 10 umfasst drei Kanalsysteme 12, 14 und 16, welche nebeneinander angeordnet sind.

Hierzu kann die Klappenvorrichtung 10 ein Übergehäuse 18 aufweisen, welches vorzugsweise als ein integrales Bauteil ausgebildet ist und in welchem weitere Bauteile der Klappenvorrichtung 10 aufgenommen sein können.

Weiter umfasst die Klappenvorrichtung 10 im dargestellten Beispiel ein dem Kanalsystem 12 zugeordnetes Gehäuse 20, ein dem Kanalsystem 14 zugeordnetes Gehäuse 22 und ein dem Kanalsystem 16 zugeordnetes Gehäuse 24.

Im dargestellten Beispiel, in welchem die Klappenvorrichtung 10 drei Strömungskanalabschnitte 26, 28 und 30 aufweist, in jedem Kanalsystem vorzugsweise eines, können also drei Gehäuse 20, 22 und 24 vorgesehen sein, welche, wie in dem in Fig. 1 gezeigten Beispiel gesondert voneinander ausgebildet sein können, oder welche auch in Abweichung hiervon integral miteinander ausgebildet sein können, wie es beispielsweise das Übergehäuse 18 in dem dargestellten Beispiel ist.

Weiter kann die Klappenvorrichtung 10 eine Dichtungsanordnung 31 aufweisen, um die Klappenanordnung 10 in Richtung der Strömungskanalabschnitte 26, 28 und 30 gegen ein nicht dargestelltes Anschlussstück dichtend anzuschließen. Überdies kann die Dichtungsanordnung 31 dazu dienen, einen möglicherweise zwischen einem Gehäuse 20, 22 oder 24 und dem Übergehäuse 18 bestehenden Spalt abzudichten.

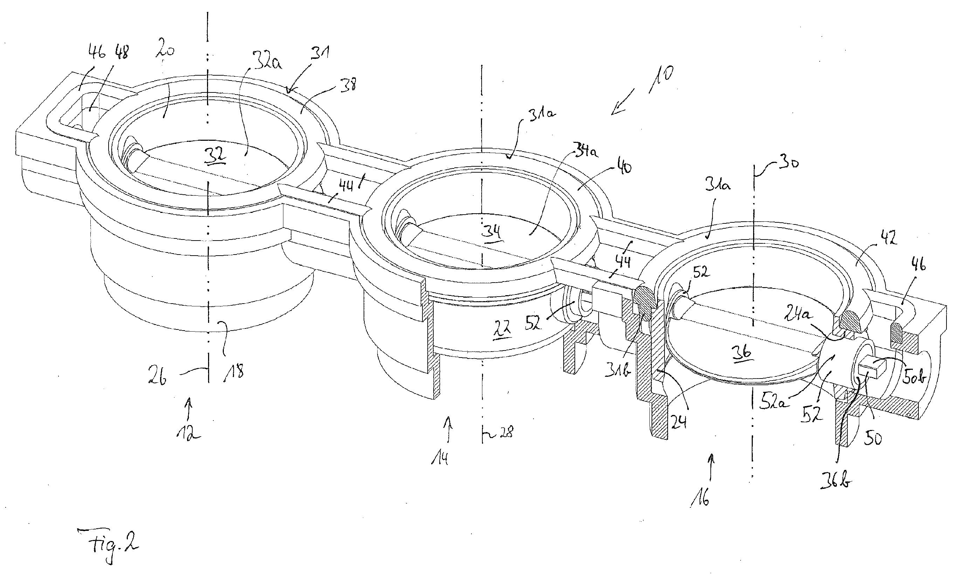

Es sei ausdrücklich darauf hingewiesen, dass abweichend von der Darstellung der Fig. 1 und 2 die Klappenvorrichtung 10 auch nur ein Gehäuse 20, zwei Gehäuse 20 und 22 oder vier oder fünf oder sechs oder mehr Gehäuse mit oder auch ohne entsprechend ausgestaltetem Übergehäuse oder Übergehäuseabschnitten aufweisen kann.

Da die Gehäuse 20, 22 und 24 in dem in Fig. 1 gezeigten Beispiel aus Gründen einer einfachen Fertigung und Montage vorzugsweise im Wesentlichen mit identischer Gestalt ausgebildet sind, wird nachfolgend lediglich das Gehäuse 20 mit der darin aufgenommenen Klappe 32 beschrieben werden, wobei ausdrücklich darauf hingewiesen wird, dass die Klappen 34 und 36 in den Gehäusen 22 bzw. 24 identisch ausgebildet sein können, so dass diese für das Gehäuse 20 und sein Innenleben gegebene Beschreibung auch auf die Gehäuse 22 und 24 zutrifft.

Die zuvor angesprochene Dichtungsanordnung 31 ist vorzugsweise ein einstückiges Dichtungselement mit Gehäusedichtungsabschnitten 38, 40 und 42, welche durch Stege 44 zu einem integralen Bauteil verbunden sein können.

Weiterhin kann die Dichtungsanordnung 31, bevorzugt integral angebunden, endseitige Dichtungsschlaufen 46 aufweisen, welche dazu dienen können, endseitige Wellenstumpfausnehmungen 48 an dem Übergehäuse 18 zur Aufnahme endseitiger Wellenstümpfe der Klappen 32, 34 und 36 zu einem Anschlussstück hin abzudichten.

Vorzugsweise ist die Dichtungsanordnung 31 aus einem für eine Abdichtung besonders gut geeigneten weichelastischen Material gebildet, beispielsweise durch Spritzgießen, jedenfalls durch ein weicherelastisches Material als das Übergehäuse 18, welches gerade keine oder nur eine möglichst geringe Verformung im bestimmungsgemäßen Belastungsfall zeigen soll.

Das Gehäuse 20 und die darin zur Relativverdrehung relativ zum Gehäuse 20 um eine Klappenachse K vorgesehene Klappe 32 sind in einem gemeinsamen Formwerkzeug in einem gemeinsamen Gießschritt aus einem identischen Gießmaterial gießtechnisch, bevorzugt spritzgießtechnisch, hergestellt worden.

Hierzu wurde bevorzugt vor dem Gießschritt ein Klappenwellenbauteil 50, welches aus verschleißfesterem Material gebildet ist als die Klappe 32 und das Gehäuse 20, in Lagerbuchsen 52 eingefädelt und zusammen mit diesen in entsprechende Kavitäten und Aufnahmen im Formwerkzeug eingelegt.

Dadurch war es vorteilhafterweise möglich, das Klappenwellenbauteil 50 mit Gießmaterial zur Bildung der Klappe 32 zu umgießen, insbesondere zu umspritzen.

Die Klappe 32, welche vorzugsweise einen Klappenkörper 32a und Klappenwellenabschnitte 32b aufweist, ist vorzugsweise mit zwei in axialer Richtung bezüglich der Klappenachse K mit Abstand voneinander angeordneten Lagerbuchsen 52 im Gehäuse 20 gelagert. Axial zwischen den Lagerbuchsen 52 ist bevorzugt der Klappenkörper 32a angeordnet, so dass durch betriebsmäßig auftretende Kräfte, etwa durch eine Gasströmung entlang des Strömungskanalabschnitts 26, keine wesentliche Durchbiegung der Klappe 32 im Bereich der Kanalachse K zu befürchten ist, was die Betriebssicherheit der Klappenvorrichtung 10 erheblich erhöht.

Die vorzugsweise integral an den Klappenkörper 32a angeformten Klappenwellenabschnitte 32b füllen in dem dargestellten Beispiel einen radial innerhalb der Lagerbuchse 52 gelegenen Bereich aus und berühren die Lagerbuchse 52 an einer radial inneren Fläche, welche zur Unterstützung der Drehlagerung der Klappe 32 vorzugsweise zylindrisch ausgebildet ist. Die Innenfläche der Lagerbuchse 52 kann zusätzlich Hinterschneidungsgeometrien, etwa um die Kanalachse K umlaufende Vorsprünge und dergleichen, aufweisen, um den Halt der Lagerbuchse 52 am Klappenwellenabschnitt 32b zu verbessern.

Dagegen ist das Gehäuse 20 an den die Lagerbuchsen 52 aufnehmenden Stellen vorzugsweise radial außen um die Lagerbuchsen 52 umspritzt, so dass das Gehäuse 20 durch die Lagerbuchsen 52 von der Klappe 32, insbesondere von den Klappenwellenabschnitten 32b materialmäßig getrennt ist, so dass an der Lagerstelle eine Relativbeweglichkeit zwischen Klappe 32 und Gehäuse 20 ermöglicht ist.

In Fig. 2 ist die Lagersituation im Teilschnitt gut an dem Kanalsystem 16 erkennbar.

Hier ist insbesondere zu sehen, dass das Gehäuse 24, ebenso wie die anderen Gehäuse 20 oder/und 22 der Klappenvorrichtung 10, einen Lagerfortsatz 24a aufweisen kann, welcher nach dem Entformen der Klappenvorrichtung 10 an einer radial äußeren Fläche 52a der Lagerbuchse 52 anliegen kann. Auch die radial äußere Fläche 52a der Lagerbuchse 52 kann eine Hinterschneidungsgeometrie aufweisen, um den Halt der Lagerbuchse 52 am Gehäuse zu verbessern.

Durch die Verwendung des identischen Gießmaterials zur Herstellung der Gehäuse einerseits und der Klappen andererseits kann überdies ein im Wesentlichen gleichförmiges und einheitliches Lagerspiel an der Relativverdrehlagerung der Klappen an den Gehäusen erreicht werden.

Wie weiter in Fig. 2 zu erkennen ist, sind die einzelnen Gehäuse 20, 22 und 24 in entsprechende Bereitstellungsräume des Übergehäuses 18 eingesetzt. Die Dichtungsanordnung 31 dichtet einen Ringspalt zwischen den Gehäusen 20, 22 und 24 und dem Übergehäuse 18 ab.

An dem seiner Dichtflläche 31 a gegenüberliegenden Endfläche kann an der Dichtungsanordnung 31 ein Verankerungsprofil 31 b ausgebildet sein, um eine Verankerung der Dichtung 31 an den Gehäusen 22, 22 bzw. 24 oder/und am Übergehäuse 18 zu gewährleisten.

Das Kopplungswellenbauteil 50 ist im vorliegenden Fall vorzugsweise als Prisma, beispielsweise als Quader, ausgebildet, um die Einleitung oder/und Übertragung eines um die Klappenachse K wirkenden Drehmoments zu erleichtern. Beispielsweise können die in Fig. 1 erkennbaren Endbereiche 50a und 50b als Formschlussgeometrien zur Ankopplung beispielsweise von in den Fig. 1 bis 3c nicht dargestellten Betätigungsbauteilen dienen, mit welchen ein die Klappen 32, 34 und 36 betätigender Aktuator zur Verstellung der Klappen 32, 34 und 36 auf diese einwirken kann.

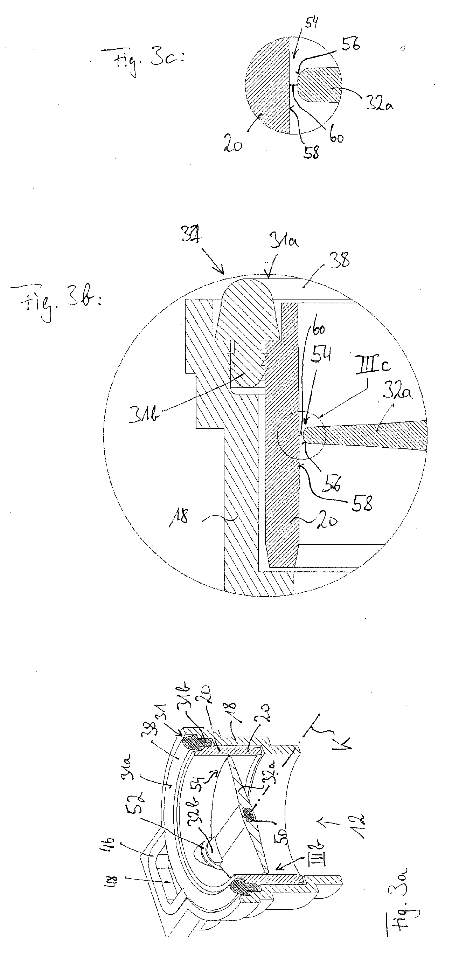

In der Querschnittsdarstellung von Fig. 3a ist im Wesentlichen zu erkennen, dass die Klappe 32, insbesondere der Klappenkörper 32a der im vorliegend diskutierten Beispiel dargestellten Klappenvorrichtung 10 spiegelsymmetrisch zu einer die Klappenachse K enthaltenden Symmetrieebene sein kann und sich insbesondere längs einer Ebene erstrecken kann.

Weiter ist in Fig. 3a ein Ringspalt 54 zwischen dem Klappenkörper 32a und dem zugeordneten Gehäuse 20 zu erkennen, welcher selbst dann besteht, wenn sich die Klappe 32 in ihrer in Fig. 3a gezeigten Sperrstellung befindet. Der Ringspalt 54 erstreckt sich genauer längs des Umfangs des Klappenkörpers 32a jeweils zwischen den Klappenwellenabschnitten 32b.

Der in Fig. 3a mit IIIb bezeichnete Bereich ist in Fig. 3b vergrößert im Querschnitt dargestellt.

Dort ist zu erkennen, wie zwischen einem Außenrand 56 des Klappenkörpers 32a und einer dem Außenrand 56 gegenüberliegenden Innenwandung 58 des Gehäuses 20 ein Gießmaterialhäutchen 60 den Ringspalt 54 überbrückend sowohl mit dem Klappenkörper 32a als auch mit dem Gehäuse 20 verbunden ist.

Das Gießmaterialhäutchen 60 wird bei dem gemeinsamen Gießschritt, in welchem sowohl die Klappe 32 als auch das Gehäuse 20 gebildet wird, erzeugt.

Fig. 3b zeigt somit einen Halbzeugzustand der Klappenvorrichtung 10.

Der in Fig. 3b mit IIIc bezeichnete Ausschnitt, welcher den Ringspalt 54 enthält, ist in Fig. 3c vergrößert dargestellt.

Dort ist zu erkennen, dass das Gießmaterialhäutchen 60 verglichen mit der Materialstärke des Klappenkörpers 32a, insbesondere in dessen äußerem Randbereich 56, eine wesentlich geringere Materialstärke aufweist, etwa eine Materialstärke von 1 bis 20 % der Materialstärke bzw. mittleren Materialstärke des Klappenkörpers 32a.

Vor der Inbetriebnahme der Klappenvorrichtung 10 wird das Gießmaterialhäutchen 60 mit einem geeigneten Werkzeug, etwa einer Klinge, durchtrennt. Dies kann am Klappenkörper 32a geschehen, dann verbleibt das Gießmaterialhäutchen 60 als Grat am Gehäuse 20, oder kann am Gehäuse 20 geschehen, dann verbleibt das Gießmaterialhäutchen 60 als Grat am Klappenkörper 32a. Letzteres ist aufgrund der damit eintretenden Strömungsverhältnisse im zugeordneten Strömungskanalabschnitt bevorzugt.

Grundsätzlich soll jedoch auch nicht ausgeschlossen sein, dass das Gießmaterialhäutchen 60 in einem Bereich zwischen den beiden Bauteilen: Klappenkörper 32a und Gehäuse 20, durchtrennt wird, so dass das Gießmaterialhäutchen 60 als Teilgrat zu einem Teil am Klappenkörper 32a und zum anderen Teil am Gehäuse 20 verbleibt.

Nach der Durchtrennung bildet das Gießmaterialhäutchen 60 als Grat oder

Teilgrat eine exakt passende Dichtung des Ringspalts 54, so dass Leckageströmungen durch den Ringspalt 54 hindurch in der Sperrstellung der Klappe 32 vermieden oder zumindest stark reduziert werden können.

Das Gießmaterialhäutchen 60 wird beim gemeinsamen Gießen, insbesondere Spritzgießen, von Klappe 32 und Gehäuse 20 ohne nennenswerte Kosten durch Fertigungsaufwand und Montageaufwand hergestellt und stellt nachfolgend eine sehr wirksame Ringspaltdichtung bereit.

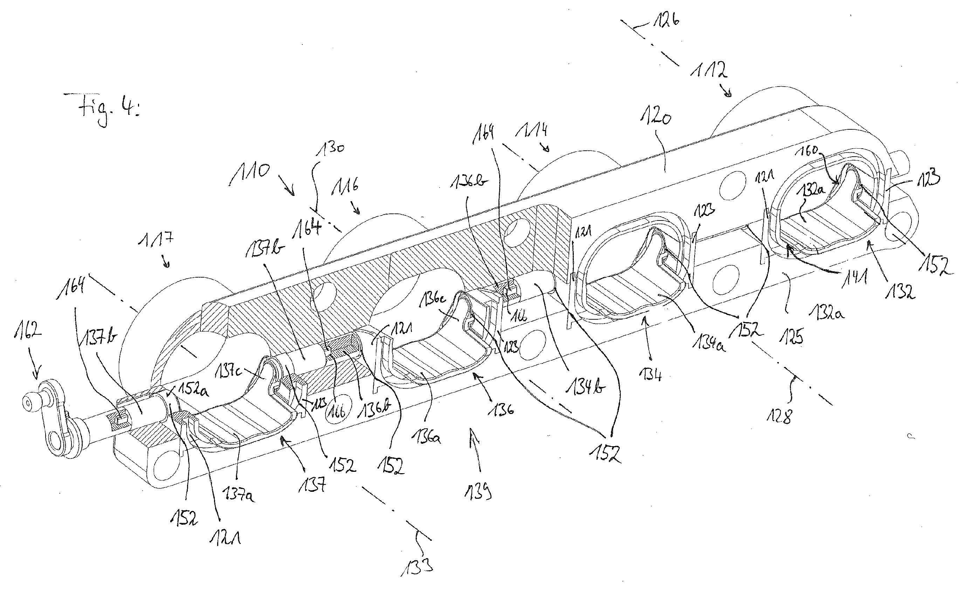

In den Fig. 4 bis 6 ist eine zweite Ausführungsform der vorliegenden Erfindung dargestellt. In dieser zweiten Ausführungsform sind gleiche Bauteile und Bauteilabschnitte mit gleichen Bezugszeichen versehen wie in der ersten Ausführungsform der Fig. 1 bis 3c, jedoch erhöht um die Zahl 100.

Die hier gezeigte Kanalvorrichtung 110 weist vier im Wesentlichen parallele Strömungskanalabschnitte 126, 128, 130 und 133 auf, welche in einem gemeinsamen Gehäuse 120 ausgebildet sind.

Alternativ hierzu kann das Gehäuse 120 auf die Art unterteilt sein, dass ein oder mehrere Untergruppen von Strömungskanalabschnitten in einem Gehäuseteil ausgebildet sind. Dabei kann ebenfalls daran gedacht sein, für jeden Strömungskanalabschnitt ein gesondertes Gehäuse auszubilden.

Wie weiter unten noch ausgeführt werden wird, kann das Gehäuse 120 zur Erleichterung der Montage des hier gezeigten Ausführungsbeispiels einer Klappenvorrichtung 110 mehrteilig ausgeführt sein.

Die Klappen 132, 134, 136 und 137 können mit entsprechend der Gestalt des zugeordneten Strömungskanalabschnitts gekrümmten Klappenkörpern 132a, 134a, 136a und 137a ausgebildet sein, welche dann vorzugsweise mit Abstand von der Klappenachse K angeordnet sind, um welche herum die gesamte Klappenanordnung 139 relativ zum Gehäuse 120 verdrehbar sein kann. In der in Fig. 4 gezeigten Durchlassstellung liegen die Klappenkörper 132a, 134a, 136a und 137a dann bevorzugt unter Bildung eines dünnen Spalts 141 eng am Gehäuse 120 an.

Die Klappenkörper können dann in der in Fig. 4 gezeigten Durchlassstellung, in welcher die jeweiligen Strömungskanalabschnitte im Gehäuse 120 im Wesentlichen einen maximalen Strömungsquerschnitt aufweisen, sich an die jeweiligen Wandungsabschnitte des Gehäuses 120 anschmiegend anlegen. Somit ragt in der Durchlassstellung der Klappenanordnung 139 vorzugsweise kein Klappenbestandteil in den ihm zugeordneten Strömungskanalabschnitt.

Die hier diskutierte zweite Ausführungsform einer erfindungsgemäßen Klappenvorrichtung 110 soll nachfolgend anhand der in Fig. 4 ganz linken Klappe 137 beschrieben werden. Sofern sich andere Klappen als die beschriebene Klappe 137 von dieser unterscheiden, wird im Rahmen dieser Beschreibung eigens auf die Unterschiede hingewiesen werden.

Die Klappe 137 umfasst den bereits genannten Klappenkörper 137a, von welchem zu beiden, bezogen auf die Klappenachse K, axialen Seiten Klappenwellenabschnitte 137b abstehen.

Vorzugsweise sind die Klappenwellenabschnitte 137b über Stegabschnitte 137c integral mit dem Klappenkörper 137a ausgeformt.

Beide vom Klappenkörper 137a fern liegenden Längsenden der Klappenwellenabschnitte 137b können Formschlussgeometrien aufweisen, welche zur drehmomentübertragenden Verbindung mit der jeweils benachbarten Klappe, hier beispielsweise Klappe 136, oder/und mit einem Betätigungsbauteil 162 dienen können.

In dem in Fig. 4 gezeigten Beispiel können beide Formschlussgeometrien als Vorsprünge 164 ausgebildet sein.

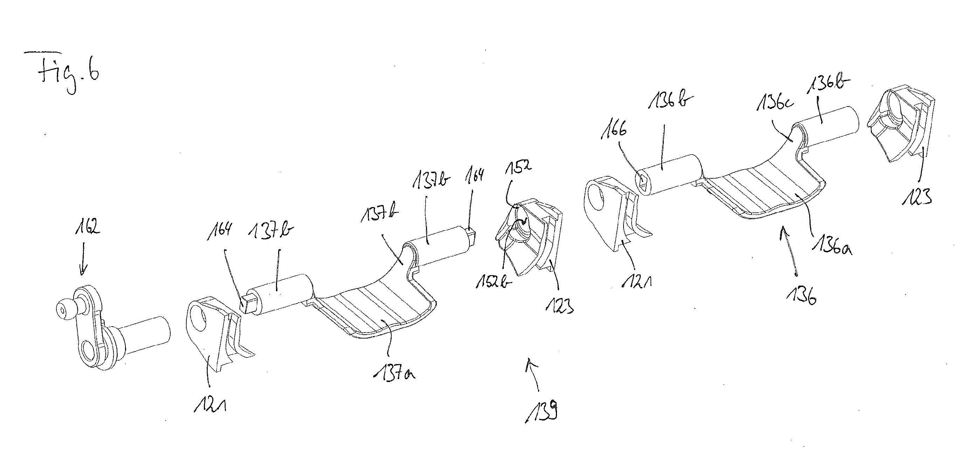

Dann können die Klappen 137 und 134 im Wesentlichen identisch ausgebildet sein, und können die Klappen 136 und 132 im Wesentlichen identisch ausgebildet sein, wobei der Unterschied zwischen benachbarten Klappen 137 und 136 (siehe Fig. 6) darin bestehen kann, dass die Klappe 136 anstelle von Vorsprüngen 164 Kopplungsausnehmungen 166 aufweist.

In dem dargestellten Beispiel weist die Klappe 136 an beiden vom Klappenkörper 136a fern liegenden Längsenden der Klappenwellenabschnitte 136b Ausnehmungen 166 auf, in welche die Vorsprünge 164 benachbarter Klappen eingeführt werden können, um die Klappen drehmomentübertragend miteinander zu verbinden.

Die in den Fig. 4 bis 6 dargestellte Situation kann hinsichtlich der erforderlichen Montage noch dahingehend verändert sein, dass jede Klappe an einem Längsende eines Klappenwellenabschnitts einen Vorsprung 164 und am jeweils anderen Längsende eine entsprechende Ausnehmung 166 aufweist. Wenn dann, bezogen auf die Stellung zum Klappenkörper, stets dieselben Klappenwellenabschnitte einen Vorsprung und die jeweils anderen eine Ausnehmung aufweisen, ist es ausreichend, eine Art von Klappen zu fertigen. Es können somit im Wesentlichen identische Klappen zu einer Klappenanordnung 139 zusammengesteckt werden.

Nach dem Zusammenstecken benachbarter Klappen oder/und eines Betätigungsbauteils 162 können die zur Drehmomentübertragung gesteckten Komponenten zusätzlich durch Kleben, Schweißen oder ein beliebiges anderes geeignetes Verfahren bei bestimmungsgemäßem Gebrauch unlösbar verbunden werden.

Bevorzugt wird hier ein Laserschweißverfahren empfohlen, welches den auftretenden thermischen Verzug minimiert und damit eine möglichst hohe Maßhaltigkeit, verbunden mit einer leichtgängigen Relativverdrehbarkeit der Klappenanordnung 139 relativ zum Gehäuse 120, gewährleistet.

Ebenfalls denkbar, wenngleich aufgrund des erhöhten Montageaufwands nicht bevorzugt, ist es, alle Klappen mit Kopplungsausnehmungen 166 auszubilden und gesondert ausgebildete Verbindungssteine in Form der Kopplungsvorsprünge 164 in die Kopplungsausnehmungen 166 benachbarter Klappen einzuführen. Zwar sind dann auch bei dieser Lösung alle Klappen im Wesentlichen geometrisch identisch, jedoch ist der Montageaufwand durch die einzuführenden Kopplungssteine unerwünscht hoch.

Die Kopplungsvorsprünge 164 sind vorzugsweise prismatisch aufgebaut, so dass sie bei Vereinigung mit den entsprechenden Kopplungsausnehmungen 166 an den Seiten ihrer Mantelflächen Drehmoment übertragen können. Im dargestellten Beispiel sind die Kopplungsvorsprünge 164 als Quader gestaltet. Jedoch ist ebenso denkbar, die Kopplungsvorsprünge 164 als Dreiecksprisma, Fünfecksprisma oder als unregelmäßiges Prisma zu gestalten.

Ebenso reicht es aus, die Ausnehmungen 166 derart auszubilden, dass Abschnitte der Innenmantelfläche einer Ausnehmung 166 an Abschnitte der Mantelfläche der Kopplungsvorsprünge 164 zur Anlage kommen und an dieser Anlage ein Drehmoment um die Klappenachse K zwischen zwei derart gekoppelten Klappen übertragbar ist.

Bevorzugt ist jedoch zur Erzielung einer möglichst exakten Geometrie der zusammengebauten Klappenanordnung 139, dass sich Klappenvorsprünge 164 und Klappenausnehmungen 166 im montierten Zustand im Wesentlichen ergänzen, also komplementär zueinander ausgebildet sind, wobei dies nicht bedeuten soll, dass die Kopplungsausnehmung 166 in einem mit einem Kopplungsvorsprung 166 vereinigten Zustand vollständig von dem Kopplungsvorsprung 164 ausgefüllt ist. Üblicherweise ist bereits aus fertigungstechnischen Gründen die Kopplungsausnehmung 166 axial länger ausgebildet als der Kopplungsvorsprung 164. Jedoch ist es vorteilhaft, wenn Kopplungsvorsprung 164 und Kopplungsausnehmung 166 wenigstens einen Axialabschnitt aufweisen, in welchem nahezu der gesamte Umfang eines Kopplungsvorsprungs 164 am Umfang der Kopplungsausnehmung 166 anliegt. Auf diese Art und Weise können die Klappen einzeln gefertigt und mit geringem Aufwand zu einer Klappenanordnung 139 mit beliebiger Länge montiert werden.

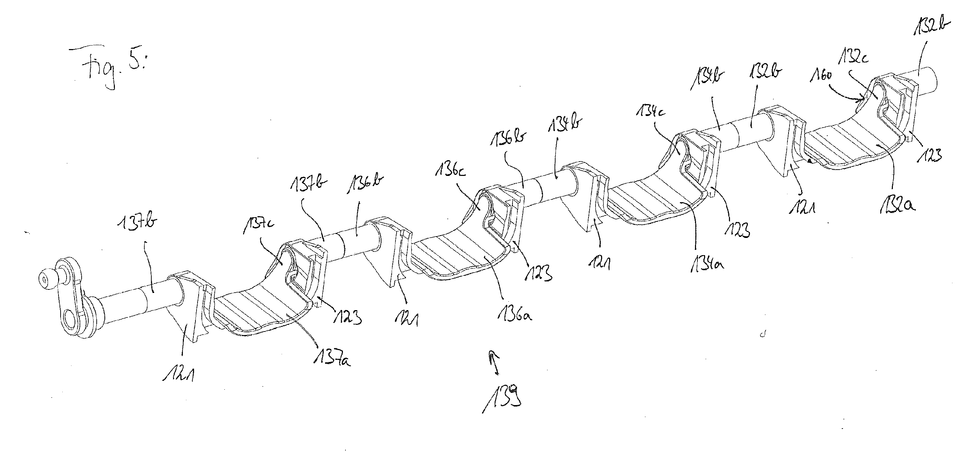

Die Klappenanordnung 139, welche in den Fig. 4 und 5 vier Klappen und ein Betätigungsbauteil 162 umfasst, kann in alternativen Ausführungsformen nur eine Klappe 137 und ein Betätigungsbauteil 162 umfassen, oder kann, wie in Fig. 6 gezeigt, nur zwei Klappen 137 und 136 und ein Betätigungsbauteil 162 oder kann nur drei, fünf, sechs oder mehr Klappen aufweisen, jeweils mit oder ohne Betätigungsbauteil 162.

Wie ebenso in den Figuren gezeigt ist, weist auch das Betätigungsbauteil eine entsprechende Formschlussgeometrie auf, hier eine Kopplungsausnehmung 166.

Wie in den Fig. 5 und 6 gezeigt, ist jeder Klappenwellenabschnitt von einem Gehäuseergänzungsbauteil 121 bzw. 123 umgeben.

Die Gehäuseergänzungsbauteile 121 bzw. 123 können im Wesentlichen identisch sein und sich lediglich in hinsichtlich ihrer Krümmungsrichtung unterscheiden. Beispielsweise können die Gehäuseergänzungsbauteile 121 und 123 bezüglich einer zur Kanalachse K orthogonalen Spielgelsymmetrieebene spiegelbildlich aufgebaut sein.

Dann, wenn jede Klappe die ihr zugeordneten Ergänzungsbauteile 121 und 123 aufweist, können die zur Bildung einer Klappenanordnung 139 benötigten Klappen über die oben beschriebenen Formschlussgeometrien drehmomentübertragend miteinander vereinigt und vorzugsweise unlösbar fixiert werden. Gleiches gilt für ein Betätigungsbauteil 162, welches endseitig an die Klappenanordnung 139 drehmomentübertragend anschließbar sein kann. Dann kann die so gebildete Klappenanordnung 139 in das Gehäusegrundbauteil 125, welches in Fig. 4 gezeigt ist, eingesetzt werden, wobei dann die jeweiligen Gehäuseergänzungsbauteile 121 und 123 das Gehäusegrundbauteil 125 zu einem Gehäuse mit vollständigen Strömungskanalabschnitten ergänzen.

Wiederum kann zwischen den Gehäuseergänzungsbauteilen 121 bzw. 123 und den sie durchsetzenden Klappenwellenabschnitten 137b, 136b, 134b, 132b eine Lagerbuchse 152 vorgesehen sein.

Im vorliegenden Fall können die Klappen, beispielsweise die Klappe 137, in einem gemeinsamen Gießschritt mit den Gehäuseergänzungsbauteilen 121 und 123 in einem gemeinsamen Formwerkzeug gegossen worden sein, beispielsweise durch Spritzgießen. Hierzu wurde bevorzugt vor dem Gießschritt in das Formwerkzeug ein Satz an Lagerbuchsen 152, welche nach dem Entformen die Gehäuseergänzungsbauteile 121 und 123 geometrisch von den Klappenwellenabschnitten 137b usw. trennen, an entsprechende Stellen im Formwerkzeug eingelegt und mit Gießmaterial umgossen, insbesondere umspritzt.

Somit liegen die Ergänzungsbauteile an einer Außenfläche 152a der Lagerbuchse 152 an, während die Klappenwellenabschnitte 137b an einer innenfläche 152b (siehe Fig. 6) der Lagerbuchsen 152 anliegen.

Daher kann eine Klappe mit der zugehörigen Gehäuselagerung in einem einzigen Gießschritt mit hoher Genauigkeit und im Wesentlichen gleichbleibendem geringem Lagerspiel ohne großen Aufwand erzeugt werden.

Da in den Fig. 4 bis 6 die Klappenanordnung 139 mit den zugehörigen Klappen in der Durchlassstellung dargestellt ist, ist die beim Gießvorgang zwischen den Gehäuseergänzungsbauteilen 121 und 123 und dem zugehörigen Klappenkörper angegossene Gießmaterialhaut 160 nur noch mit dem jeweiligen Klappenkörper verbunden.

## Patentansprüche

1. Verfahren zur gießtechnischen, insbesondere spritzgießtechnischen Herstellung einer Klappenvorrichtung (10; 110), insbesondere Drosselvorrichtung, bevorzugt zum Einsatz in Kraftfahrzeugen, wobei die Klappenvorrichtung (10; 110) ein Gehäuse (20, 22, 24; 120) umfasst, welches einen Strömungskanalabschnitt (26, 28, 30; 126, 128, 130, 133) umgibt, und weiter eine am Gehäuse (20, 22, 24; 120) derart relativ zu diesem beweglich aufgenommene Klappe (32, 34, 36; 132, 134, 136, 137) umfasst, dass durch eine Relativverstellung der Klappe (32, 34, 36; 132, 134, 136, 137) relativ zum Gehäuse (20, 22, 24; 120) der wirksame Strömungsquerschnitt des Strömungskanalabschnitts (26, 28, 30; 126, 128, 130, 133) veränderbar ist,
**dadurch gekennzeichnet, dass** das Gehäuse (20, 22, 24; 120) und die daran bereits aufgenommene Klappe (32, 34, 36; 132, 134, 136, 137) in einem Formwerkzeug in einem gemeinsamen Gießschritt aus einer fließfähigen Gießmasse formgebend gebildet werden, und zwar unter einstückiger Ausbildung eines verglichen mit den Wandstärken des Gehäuses (20, 22, 24; 120) und der Klappe (32, 34, 36; 132, 134, 136, 137) dünnen Gießmaterialhäutchens (60; 160) zusammen mit der Klappe (32, 34, 36; 132, 134, 136, 137) und dem Gehäuse (20, 22, 24; 120), wobei das Gießmaterialhäutchen (60; 160) zwischen einem äußeren Klappenabschnitt, bevorzugt genauer zwischen einem äußeren Klappenrand (56), und einem den Klappenabschnitt, bevorzugt den Klappenrand (56), in einer Sperrstellung der Klappe (32, 34, 36; 132, 134, 136, 137) relativ zum Gehäuse (20, 22, 24; 120) umgebenden Gehäuseabschnitt vorgesehen wird, in welcher Sperrstellung der Strömungsquerschnitt des Strömungskanalabschnitts (26, 28, 30; 126, 128, 130, 133) in der Regel minimal ist.

2. Verfahren nach Anspruch 1,
**dadurch gekennzeichnet, dass** es den Schritt eines Durchtrennens des Gießmaterialhäutchens (60; 160) umfasst.

3. Verfahren nach Anspruch 1 oder 2,
**dadurch gekennzeichnet, dass** die Klappe (32, 34, 36; 132, 134, 136, 137) an der fertigen Klappenvorrichtung (10; 110) um eine Klappenachse (K) relativ zum Gehäuse (20, 22, 24; 120) verdrehbar an diesem vorgesehen ist, wobei das Verfahren folgende Verfahrensschritte aufweist:
- Einlegen eines Klappenwellenbauteils (50) in das Formwerkzeug, und
- Angießen, insbesondere Anspritzen, der Klappe (32, 34, 36) an das Klappenwellenbauteil (50) oder
- Umgießen, insbesondere Umspritzen, des Klappenwellenbauteils (50) mit der Klappe (32, 34, 36).

4. Verfahren nach einem der vorhergehenden Ansprüche,
**dadurch gekennzeichnet, dass** die Klappe (32, 34, 36; 132, 134, 136, 137) an der fertigen Klappenvorrichtung (10; 110) um eine Klappenachse (K) relativ zum Gehäuse (20, 22, 24; 120) verdrehbar an diesem vorgesehen ist, wobei das Verfahren folgende Verfahrensschritte aufweist:
- Einlegen wenigstens einer Lagerbuchse (52; 152) in das Formwerkzeug, vorzugsweise von zwei Lagerbuchsen (52; 152), besonders bevorzugt derart, dass zwischen zwei derselben Klappe (32, 34, 36; 132, 134, 136, 137) zugeordneten Lagerbuchsen (50; 152) ein Abschnitt einer Klappenkavität des Formwerkzeugs gelegen ist, und
- Angießen, insbesondere Anspritzen, von zur Bildung der Klappe (32, 34, 36; 132, 134, 136, 137) beitragendem Gießmaterial an eine erste, der Klappe (32, 34, 36; 132, 134, 136, 137) zugeordneten Klappenlagerfläche (152b) der Lagerbuchse (52; 152), und
- Angießen, insbesondere Anspritzen, von zur Bildung des Gehäuses (20, 22, 24; 120) beitragendem Gießmaterial an eine von der ersten verschiedene zweite, dem Gehäuse (20, 22, 24; 120) zugeordnete Gehäuselagerfläche (52a; 152a) der Lagerbuchse (52; 152).

5. Verfahren nach einem den Ansprüchen 3 und 4,
**dadurch gekennzeichnet, dass** es den Schritt eines Einfädelns des Klappenwellenbauteils (50) in eine Lagerbuchse (52) umfasst.

6. Halbzeug einer Klappenvorrichtung (10; 110), insbesondere Drosselvorrichtung, bevorzugt zum Einsatz in Kraftfahrzeugen, wobei die fertiggestellte Klappenvorrichtung (10; 110) ein Gehäuse (20, 22, 24; 120) umfasst, welches einen Strömungskanalabschnitt (26, 28, 30; 126, 128, 130, 133) umgibt, und weiter eine am Gehäuse (20, 22, 24; 120) derart relativ zu diesem beweglich aufgenommene Klappe (32, 34, 36; 132, 134, 136, 137) umfasst, dass durch eine Relativverstellung der Klappe (32, 34, 36; 132, 134, 136, 137) relativ zum Gehäuse (20, 22, 24; 120) der wirksame Strömungsquerschnitt des Strömungskanalabschnitts (26, 28, 30; 126, 128, 130, 133) veränderbar ist, insbesondere hergestellt gemäß einem Verfahren nach einem der vorhergehen Ansprüche, **dadurch gekennzeichnet, dass** die Klappe (32, 34, 36; 132, 134, 136, 137), insbesondere wenigstens ein äußerer Klappenrand (56), und ein in betriebsmäßigem Zustand der Klappenvorrichtung (10; 110) die Klappe (32, 34, 36; 132, 134, 136, 137) umgebender Gehäuseabschnitt über ein verglichen mit der Wandstärke des Gehäuses (20, 22, 24; 120) und der Klappe (32, 34, 36; 132, 134, 136, 137) dünnes Gießmaterialhäutchen (60; 160) verbunden und somit einstückig ausgebildet sind.

7. Halbzeug nach Anspruch 6,
**dadurch gekennzeichnet, dass** die Klappe (32, 34, 36; 132, 134, 136, 137) wenigstens einen Klappenwellenabschnitt (32b, 34b, 36b; 132b, 134b, 136b, 137b) aufweist, mit welchem die Klappe (32, 34, 36; 132, 134, 136, 137) drehbar am Gehäuse (20, 22, 24; 120) gelagert ist, und einen Klappenkörper (32a, 34a, 36a; 132a, 134a, 136a, 137a) aufweist, welcher zur Veränderung des Strömungsquerschnitts im Strömungskanalabschnitt (26, 28, 30; 126, 128, 130, 133) aufgenommen ist, wobei der wenigstens eine Klappenwellenabschnitt (32b, 34b, 36b; 132b, 134b, 136b, 137b) einstückig mit dem Klappenkörper (32a, 34a, 36a; 132a, 134a, 136a, 137a) ausgebildet ist.

8. Halbzeug nach Anspruch 6 oder 7,
**dadurch gekennzeichnet, dass** die Klappe (32, 34, 36; 132, 134, 136, 137) zwei bezüglich der Klappenachse (K) im Wesentlichen koaxiale Klappenwellenabschnitte (32b, 34b, 36b; 132b, 134b, 136b, 137b) aufweist, wobei der Klappenkörper (32a, 34a, 36a; 132a, 134a, 136a, 137a) axial zwischen den Klappenwellenabschnitten (32b, 34b, 36b; 132b, 134b, 136b, 137b) vorgesehen ist.

9. Halbzeug nach einem der Ansprüche 5 bis 8,
**dadurch gekennzeichnet, dass** es mehrere Klappen (32, 34, 36; 132, 134, 136, 137) aufweist, wobei benachbarte Klappen (32, 34, 36; 132, 134, 136, 137) durch Formschlussgeometrien (164, 166) zur gemeinsamen Bewegung miteinander koppelbar oder gekoppelt sind.

10. Halbzeug nach Anspruch 9, unter Einbeziehung des Anspruchs 8,
**dadurch gekennzeichnet, dass** der eine von zwei mit einem Klappenkörper (32a, 34a, 36a; 132a, 134a, 136a, 137a) verbundene Klappenwellenabschnitt (32b, 34b, 36b; 132b, 134b, 136b, 137b), vorzugsweise an einem freien axialen Ende desselben, eine Kopplungsgeometrie (164 oder 166) aufweist und dass der jeweils andere Klappenwellenabschnitt (32b, 34b, 36b; 132b, 134b, 136b, 137b) eine Kopplungsgegengeometrie (166 oder 164) aufweist, wobei die Kopplungsgeometrie (164 oder 166) und die Kopplungsgegengeometrie (166 oder 164) formschlüssig zu einer gemeinsamen Drehbewegung um die Klappenachse (K) koppelbar sind.

11. Halbzeug nach Anspruch 10,
**dadurch gekennzeichnet, dass** eine Geometrie (166) aus Kopplungsgeometrie (164 oder 166) und Kopplungsgegengeometrie (166 oder 164) eine Ausnehmung (166) und die jeweils andere Geometrie (164) einen drehmomentübertragend in die Ausnehmung (166) einführbaren Vorsprung (164), vorzugsweise einen zu wenigstens einem Abschnitt des Ausnehmungsumfangs komplementären Vorsprung, aufweist.

12. Klappenvorrichtung, insbesondere Drosselvorrichtung, bevorzugt zum Einsatz in Kraftfahrzeugen, wobei die Klappenvorrichtung (10; 110) ein (20, 22, 24; 120) umfasst, welches einen Strömungskanalabschnitt (26, 28, 30; 126, 128, 130, 133) umgibt, und weiter eine am Gehäuse (20, 22, 24; 120) derart relativ zu diesem beweglich aufgenommene Klappe (32, 34, 36; 132, 134, 136, 137) umfasst, dass durch eine Relativverstellung der Klappe (32, 34, 36; 132, 134, 136, 137) relativ zum Gehäuse (20, 22, 24; 120) der wirksame Strömungsquerschnitt des Strömungskanalabschnitts (26, 28, 30; 126, 128, 130, 133) veränderbar ist, vorzugsweise hergestellt mit einem Verfahren nach einem der Ansprüche 1 bis 4 oder/und aus einem Halbzeug nach einem der Ansprüche 5 bis 11,
**dadurch gekennzeichnet, dass** die Klappe (32, 34, 36; 132, 134, 136, 137), insbesondere ein äußerer Klappenrand (56) der wenigstens einen Klappe (32, 34, 36; 132, 134, 136, 137), oder/und ein die Klappe (32, 34, 36; 132, 134, 136, 137) umgebender Abschnitt des Gehäuses (20, 22, 24; 120) als Spaltdichtung des bei maximal durch die Klappe (32, 34, 36; 132, 134, 136, 137) reduziertem Strömungsquerschnitt zwischen der Klappe (32, 34, 36; 132, 134, 136, 137) und dem Gehäuse (20, 22, 24; 120) verbleibenden Spalts einen, vorzugsweise vollständig, umlaufenden Grat (60; 160) aus demselben Gießmaterial aufweist, aus dem der Klappenabschnitt, insbesondere der Klappenrand der Klappe (32, 34, 36; 132, 134, 136, 137), vorzugsweise die gesamte Klappe (32, 34, 36; 132, 134, 136, 137), und der Gehäuseabschnitt hergestellt sind.

13. Klappenvorrichtung nach Anspruch 12 mit dem kennzeichnenden Teil wenigstens eines der Ansprüche 6 bis 11.

14. Klappenvorrichtung nach Anspruch 13, in Kombination mit den kennzeichnenden Teilen der Ansprüche 10 oder 11, sowie weiter in Kombination mit den kennzeichnenden Teilen der Ansprüche 8 und 9, **dadurch gekennzeichnet, dass** die Klappenvorrichtung (10; 110) ein Betätigungsbauteil (162) aufweist, welches zur Einleitung eines Betätigungsmomentes zur Relativverdrehung von Klappe (32, 34, 36; 132, 134, 136, 137) und Gehäuse (20, 22, 24; 120) mit wenigstens einer Klappe (32, 34, 36; 132, 134, 136, 137) verbindbar oder verbunden ist, wobei auch das Betätigungsbauteil (162) eine Geometrie aus Kopplungsgeometrie (164 oder 166) und Kopplungsgegengeometrie (166 oder 164) aufweist.

15. Klappenvorrichtung nach Anspruch 13 oder 14, wenigstens in Kombination mit den kennzeichnenden Teilen der Ansprüche 8 und 9, **dadurch gekennzeichnet, dass** eine Mehrzahl von einzeln hergestellten Klappen (32, 34, 36; 132, 134, 136, 137) zusätzlich zu den vorgesehenen Formschlussgeometrien (164, 166) durch Stoffschluss, insbesondere durch Laserschweißen, oder durch Klebung oder sonstwie betriebsmäßig unlösbar miteinander verbunden sind.
